# EUROPEAN PATENT SPECIFICATION

(11) **EP 1 439 114 B1**
(45) Date of publication and mention of the grant of the patent: **03.05.2006**
(21) Application number: 03425815.2
(22) Date of filing: 23.12.2003
(51) Int. Cl.: B62J 1/16, F16L 3/10, B62J 11/00

(54) **Fastening device for tubular elements**
Befestigungsvorrichtung für rohrförmige Körper
Dispositif d'assemblage d'un profile tubulaire

(30) Priority: 20.01.2003 IT BS20030006
(43) Date of publication of application: 21.07.2004
(73) Proprietor: OKBABY S.R.L., 24060 Telgate (Bergamo) (IT)
(72) Inventor: Erli, Pier Angelo, 24060 Cenate Sotto (Bergamo) (IT)
(74) Representative: Galassi, Alessandro

(56) References cited:
- EP-A- 0 572 884
- EP-A- 1 035 007
- DE-A1- 10 035 429
- DE-A1- 19 640 386
- DE-U1- 9 204 494
- DE-U1- 9 307 485
- DE-U1- 29 515 357
- GB-A- 2 322 406
- US-A- 2 550 001
- US-A- 5 845 830

## Description

The present invention relates to a fastening device for tubular elements including the characteristics referred to in the preamble of claim 1. In further detail, the present invention can be advantageously used in the field of bicycles, for coupling and fastening an accessory, such as a rack or a children's seat, to the bicycle frame. It should be pointed out that the present invention could further be used in any field in which any component should be coupled with a tubular element. However, given the advantageous use in the field of bicycles, in the following description "tubular element" shall refer to a portion of bicycle frame, without however acquiring any specificity. As is known, accessories to be mounted onto bicycles, such as children's seats, are usually arranged in the rear portion of the bicycle, and more precisely above the rear wheel. Said seats are linked to the bicycle frame by means of a fastening device coupled with the vertical tubular element of the frame. In particular, fastening devices comprise two jaws facing each other and designed to close onto the tubular element. Both jaws generally have inner surfaces matching the tubular element, so as to adhere better onto the outer surface of said tubular element. The jaws are coupled with each other through suitable clamping means, such as for instance clamping screws, passing through convenient threaded holes obtained within said jaws. Thus, by acting upon the screws, the jaws move towards or away from each other so as to be clamped with the tubular element. The jaws are generally closed within a box-shaped body, consisting for instance of two hollow portions that can be coupled with each other after clamping the jaws with the tubular element. The box-shaped body further has two holes developing parallel to the longitudinal development of the tubular element and designed to house two rods for supporting said seat. Thus, when the seat has to be mounted onto the bicycle, the jaws are closed around the tubular element and said rods are inserted into the box-shaped body.

An example of fastening device for children's seats of the cited type is shown by Document DE 93 07 485.

In particular, the device of said Document comprises two elements having a semi-circumferential profile that are suitable for matching the tubular element of a bicycle. These elements are respectively associated to an housing element. The device also comprises means for fixing the two housing elements to the tubular element of the bicycle.

Document GB 2322406 discloses a fastening device for tubular elements according to the preamble of claim 1.

Although fastening devices can be easily mounted and dismounted onto and from the tubular element of the frame, the Applicant has found that they show some problems and can be improved under several points of view, mainly as far as their versatility of use and clamping efficiency are concerned. More to the point, the Applicant has noted that fastening devices cannot be coupled with any bicycle frame, since the cross section of the tubular element can have various shapes. As a matter of fact, for instance in case of tubular elements having an elliptical cross section, the inner surface of the jaws, which usually matches a tubular element with a circular cross section, does not fully abut onto the outer surface of said tubular element. This problem gets even more serious if the cross section of the tubular element has an irregular shape, since the resting surface between jaws and outer surface of the tubular element is very small. As a consequence, depending on the shape of the tubular element of the frame a convenient fastening device should be provided for, thus increasing costs for manufacturing different types of fastening devices. Moreover, the small contact surface between jaws and tubular element results in a low-efficiency and low-safety clamping, which in the case of support for children's seats can cause the detachment of the saddle from the frame. An alternative known solution envisages a series of interchangeable thicknesses having different shape and size, which can be placed between a jaw and the tubular element, thus suiting the fastening device for tubes with different shape and size. However, also this solution has some drawback since it is expensive and inconvenient for the final user due to its higher mounting complexity. Furthermore, in order to suit the fastening device to a large number of different tubular element, a correspondingly large number of thicknesses should be provided for. The present invention aims at solving the problems met in the prior art by suggesting a fastening device for tubular elements which can be used independently of the cross section of said tubular element. In further detail, the invention aims at providing a fastening device which is able to firmly clamp in operating conditions a tubular element basically whatever the shape of the latter. The invention further aims at carrying out a fastening device for tubular elements which is easily carried out, easily and rapidly mounted and with low costs. These and other aims, which shall be more evident from the following description, are basically achieved by a fastening device for tubular elements comprising the characteristics referred to in the characterizing portion of claim 1 and in the remaining claims. Further characteristics and advantages shall be more evident from the detailed description of a preferred, though not exclusive, embodiment of a fastening device according to the present invention. Said description shall be related hereinafter with reference to the accompanying figures, provided to a mere non-limiting purpose, in which:
- Figure 1 shows a perspective view of a fastening device coupled with a tubular element according to the present invention;
- Figure 2 is a perspective view of the fastening device of Figure 1 where some parts have been removed so as to show other better;
- Figure 3 is a view in front elevation of the device of Figure 2;
- Figure 4 is an exploded perspective view of the fastening device shown in Figure 1;
- Figure 5 is a perspective view of a construction detail of the exploded view of Figure 4;

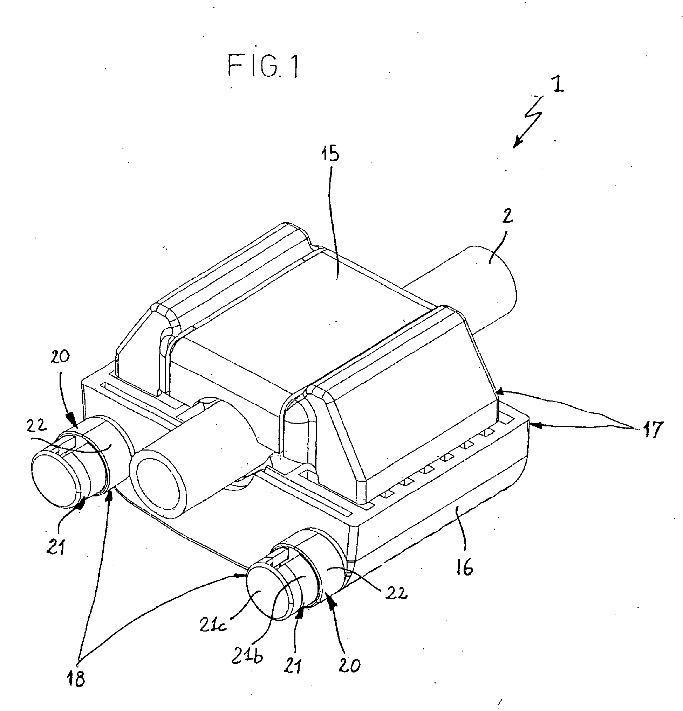

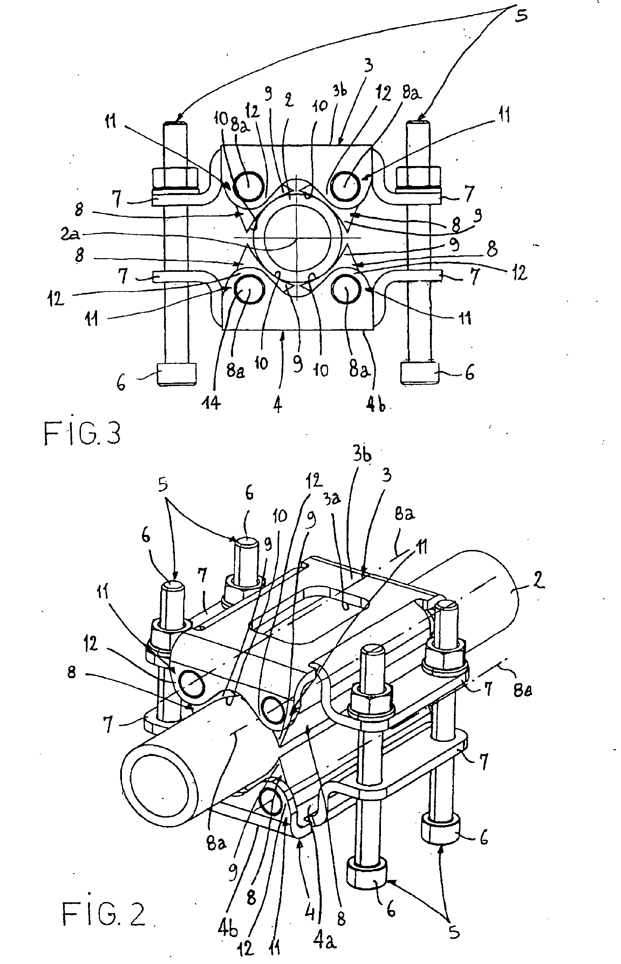

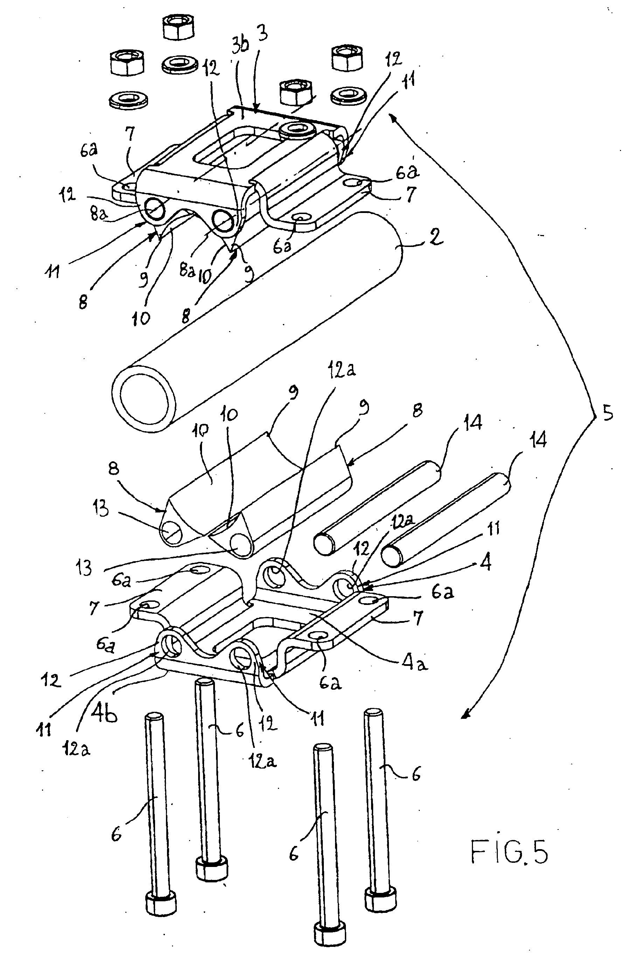

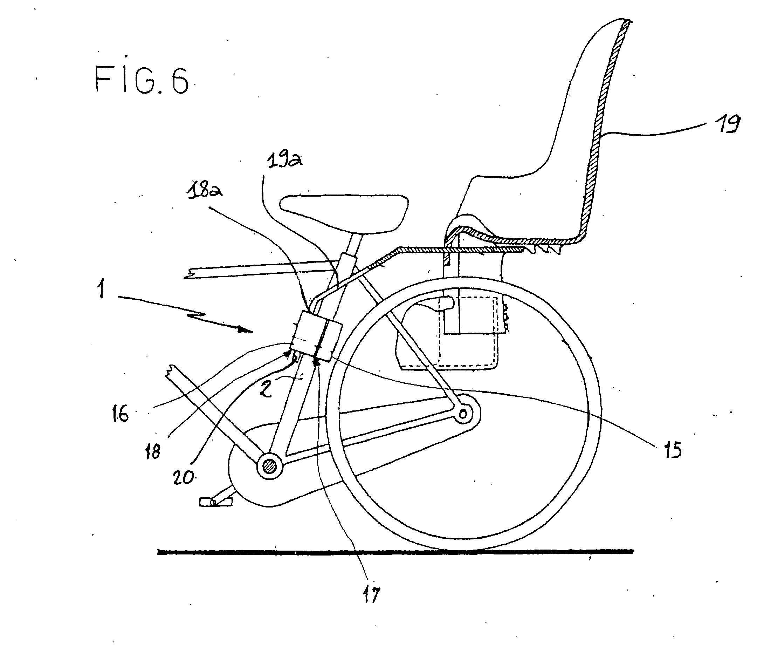

- Figure 6 is a view in lateral elevation of the fastening device of Figure 1 coupled with a bicycle frame. With reference to the figures mentioned above, the fastening device for tubular elements, in particular for fastening children's seats, racks and the like to bicycles, according to the invention is globally referred to with number 1. As is better shown in Figure 2, the device 1 consists of a first movable portion 3 and of a second movable portion 4 facing each other and arranged on opposite positions with respect to the tubular element 2. Each movable portion 3, 4 has a basically plate-like shape and a rectangular peripheral development, in which an inner surface 3a, 4a facing the tubular element 2 and an outer surface 3b, 4b opposite the inner surface 3a, 4a are defined. The device 1 further comprises interconnection means 5 coupled with said first 3 and second 4 movable portion so as to move the movable portions 3, 4 towards and away from each other and to connect the movable portions 3, 4 to each other. In further detail, the interconnection means 5 advantageously comprise a plurality of screws 6 operatively inserted into threaded holes 6a obtained on lateral portions 7 of every movable portion 3, 4. As can be seen in Figures 2 and 5, each movable portion 3, 4 has on the long sides of its rectangular peripheral development its corresponding lateral portions 7, which have a planar development parallel to the planar development of the movable portions 3, 4. It should be noted that each lateral portion 7 of the first movable portion 3 faces a lateral portion 7 of the second movable portion 4. The device 1 further comprises at least a resting element 8 abutting against the tubular element 2 and movably mounted onto the corresponding inner surfaces 3a, 3b. In the preferred embodiment, said resting element 8 is turnably mounted onto a movable portion 3, 4. In an execution variant, said resting element could also be mounted in a movable or other way, provided that it can be shifted at least between a rest position and a plurality of operating positions in which it can abut against tubular elements with various shapes and size so as to suit the fastening device to different tubular elements. In this case the resting element 8 would be provided with elastic means, such as a spring, pushing it against the tubular element. Preferably, each movable portion 3, 4 comprises two resting elements 8 turning around corresponding parallel longitudinal axes 8a. As can be seen better in Figure 3, the resting elements 8 of the first 3 and second 4 movable portion are arranged symmetrically to one another with respect to the tubular element 2. In further detail, each resting element has a basically cylindrical shape and develops parallel to the long sides of the corresponding movable portion 3, 4. Under these circumstances, the resting element 8 can rotate along its axis 8a parallel to the axis 2a of longitudinal development of the tubular element 2 among a plurality of operating positions. Along the longitudinal development of each resting element 8 a surface portion 9 with basically hollow shape is defined, in which portion a contact surface 10 designed to be in contact with the tubular element 2 develops. Advantageously, the contact surface basically matches the outer surface of said tubular element 2. Moreover, each resting element 8 has a through hole 13 extending along the longitudinal axis 8a of the resting element 8. Each resting element is coupled with its corresponding movable portion 3, 4 by means of suitable coupled mounting means 11 designed to hinge the resting element 8 upon its corresponding movable portion 3, 4. Sad mounting means 11 comprise a pair of extensions 12, each being arranged on an end of the corresponding resting element 8. Each extension 12 extends transversally from the inner surface 3a, 4a of the corresponding movable element 3, 4 and has an opening 12a.

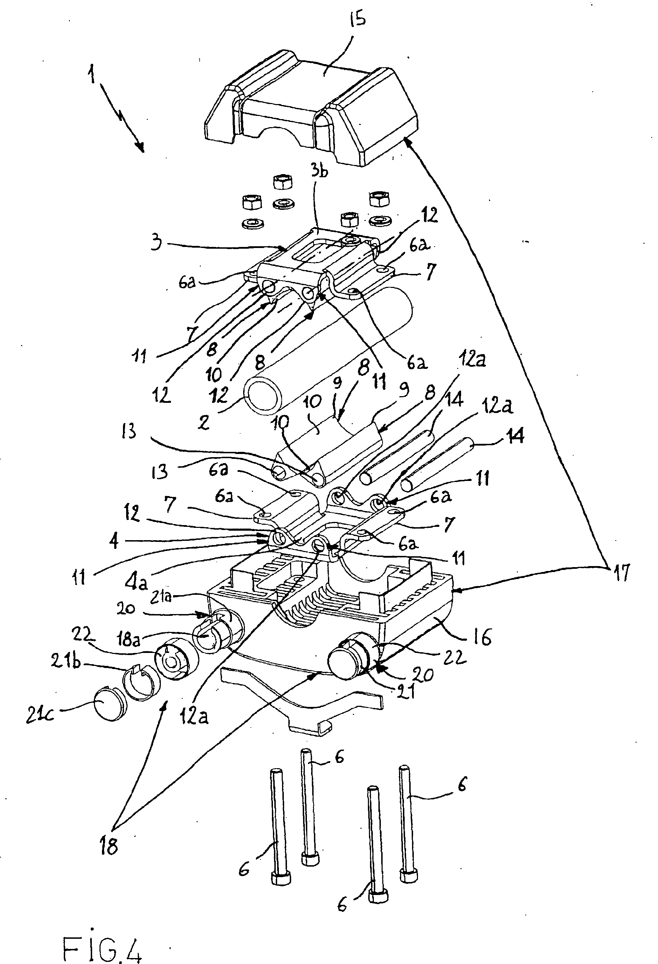

Within the opening 12a of each extension 12 and within the hole 13 of each resting element 8, a corresponding through pin 14 extends, which has a longitudinal development corresponding to the axis 8a, so that each resting element 8 can freely turn around its axis 8a. Still referring to the accompanying figures, and in particular to Figures 1 and 4, the device 1 further comprises a first box-shaped body 15 to be coupled with the first movable portion 3, and a second box-shaped body 16 to be coupled with the second movable portion 4. The box-shaped bodies 15, 16 can be coupled with each other so as to define an envelope 17 surrounding and enclosing the first and second movable portion 15, 16. Advantageously, at least one of the box-shaped bodies 15, 16 comprises connection means 18 for a bicycle children's seat 19, and in particular for suitable mounting brackets 19a of said seat. In the solution shown in the accompanying figures, the connection means 18 are preferably coupled with the second box-shaped portion 16, i.e. with the box-shaped portion opposite the rear wheel of the bicycle (Figure 6), when the device 1 is wholly mounted onto the latter. More to the point, the connection means 18 preferably comprise one or more openings 18a designed to house the ends of said brackets 19a and carried out in the second box-shaped body 16 basically parallel to the development axis 8a of the tubular element 8. The brackets 18a can be fastened into the box-shaped body, for instance with a snap mechanism, in various ways known per se, which shall not therefore be further described in the following. Moreover, the connection means 18 are further equipped with signaling means 20, which can detect and therefore signal the correct engagement of the seat 19 with said connection means 18. Said signaling means are preferably visual systems comprising at least a cylindrical stationary portion 21 and at least a sliding element 22 moving with respect to the stationary portion 21 so as to be easily seen by a user.

Advantageously, said signaling means 20 comprise on at least an opening 18a and preferably on both openings 18a a stationary cylinder 21 protruding from the corresponding box-shaped body 16 on the lower side, opposite the upper side where the brackets 19a are let in, and therefore arranged on a lower end of the corresponding opening 18a. Each cylinder 21 is operatively coupled with a sliding element 22, preferably cylindrical, which is shifted on the corresponding cylinder 21 between a forward operating position, in which the seat 19 is coupled with the connection means 18, and a backward non-operating position, in which the seat 19 is disengaged from the connection means 18. The sliding element 22 is kept in its forward operating position by means of a suitable retention spring not shown in the figure and housed for instance within the cylinder 21. The cylinder 21 comprises for instance a cylindrical body 21a, a colored signaling portion 21b, for instance red-colored, and a closing plug 21c. When the sliding element 22 is in backward position, the colored signaling portion 21b can be seen by the user, who is therefore informed about the non-engagement of the seat into the fastening device. When the brackets 19a of the seat 19 are engaged into the holes 18a and fastened correctly, the sliding element 22 is pushed, for instance by the end of the brackets 19a, in forward position and therefore covers the colored signaling portion 21b, thus informing the user about the correct fastening of the seat 19. As shown in Figures 1 and 4, the connection means 18 have two openings 18a, with which corresponding cylinders 21 as well as corresponding sliding elements 22 are preferably coupled.

The invention has important advantages and achieves the intended aims. First of all, the fastening device for tubular elements according to the present invention can engage in an optimal way any kind of existing tubular element. In other words, the peculiar structure of the device enables it to suit to the different features of the tubular elements they are coupled with. In particular, the free rotation of the resting elements around their respective longitudinal axes enables the device to operate basically with the same efficiency both on tubular elements with basically regular sections, such as for instance circular and/or elliptical sections, and on tubular elements whose cross section profile can have two or more arched portions with different radius. It should further be noted that the aforesaid capacity of abutting firmly against any kind of tubular element, whatever its section, makes the device reliable and safe as far as bicycle children's seats to be supported are concerned. It should further be pointed out that a fastening device according to the present invention can be mounted easily and rapidly. Moreover, a universal fastening device allows to reduce dramatically current manufacturing costs, normally due to specific fastening devices dedicated only to corresponding tubular elements, thus reducing their marketing costs.

## Claims

1. Fastening device for tubular elements, in particular for fastening children's seats, racks and the like to bicycles, comprising:
- a first movable portion (3) having an axis, along which a tubular element is to be fastened, and an inner surface (3a) facing the tubular element (2) in a mounted state;
- a second movable portion (4) having an inner surface (4a) facing the inner surface (3a) of the first movable portion (3), said tubular element (2) to be placed between the inner surfaces (3a, 4a) of the respective movable portions (3, 4);
- interconnection means (5) coupled with said first and second movable portion (3, 4) for shifting the movable portions (3, 4) towards and away from each other and for connecting the movable portions (3, 4) to one another;
at least one of said first and said second movable portions (3, 4) comprises at least one resting element (8) for abutting against the tubular element (2), said resting element (8) being movably mounted on the respective inner surface (3a, 4a) of said at least one of said first and second movable portions (3, 4);
**characterized in that** said resting element (8) is adapted to rotate along a respective axis (8a) parallel to the axis of the first movable portion (3) among a plurality of operating positions.

2. Device according to claim 1, **characterized in that** each movable portion (3, 4) comprises at least a resting element (8) movably mounted.

3. Device according to claims 1 or 2, **characterized in that** each movable portion (3, 4) comprises two movable resting elements (8).

4. Device according to claim 3, **characterized in that** said resting elements (8) of the first and second movable portion (3, 4) are adapted to be arranged symmetrically one to the other with respect to the tubular element (2).

5. Device according to any of the preceding claims, **characterized in that** each resting element (8) is adapted to have a contact surface (10) abutting against the tubular element (2) and basically matching the outer surface of said tubular element.

6. Device according to any of the preceding claims, **characterized in that** said resting element (8) are turnably mounted onto said movable portions (3, 4).

7. Device according to any of the preceding claims, **characterized in that** each movable portion (3, 4) comprise two resting elements (8) turning around respective parallel longitudinal axes (8a).

8. Device according to claims 7, **characterized in that** each resting element (8) has an elongated shape developing along the corresponding longitudinal axis (8a).

9. Device according to any of the claims 5 to 8, **characterized in that** each resting element (8) has a surface portion (9) extending along the whole longitudinal development of said resting element and having a hollow shape, said contact surface (10) being defined in the surface portion (9).

10. Device according to any of the preceding claims, **characterized in that** it further comprises mounting means (11) coupled with each movable portion (3, 4) for hinging the respective resting element (8) upon the respective movable portion (3, 4).

11. Device according to claim 10, **characterized in that** said mounting means (11) comprise:
- a pair of extensions (12) extending transversally from the inner surface (3a, 4a) of the respective movable portion (3, 4), each extension being arranged on respective ends of the corresponding resting element (8); and
- a pin (14) getting through an opening (12a) made in each extension and through a hole (8a) obtained in the respective resting element (8) and developing along the longitudinal axis (8a) of said resting element.

12. Device according to any of the preceding claims, **characterized in that** said interconnection means (5) comprise a plurality of screws (6) operatively inserted into threaded holes (6a) obtained on lateral portions (7) of each movable portion.

13. Device according to any of the preceding claims, **characterized in that** it further comprises a first box-shaped body (15) to be coupled with the first movable portion (3), and a second box-shaped body (16) to be coupled with the second movable portion (4), said box-shaped bodies (15, 16) being coupled with one another so as to form an envelope (17) for said first and second movable portion (3, 4).

14. Device according to the preceding claim, **characterized in that** at least one of said box-shaped bodies (15, 16) comprises connecting means (18) for a bicycle children's seat (19).

15. Device according to claim 14, **characterized in that** said connection means (18) comprise at least an opening (18a) made in said box-shaped body (15, 16) and developing basically parallel to the development axis of the tubular element (2).

16. Device according to claims 14 or 15, **characterized in that** it further comprises signaling means (20) signaling the correct engagement of the seat (19) with the connection means (18).

17. Device according to claim 16, **characterized in that** said signaling means (20) are visual signaling means.

18. Device according to claims 16 or 17, **characterized in that** said signaling means (20) comprise at least:
- a stationary portion (21) protruding from said box-shaped body (15, 16) on an end of said opening (18a); and
- a sliding element (22) mounted onto said stationary portion (21) and moving with respect to said stationary portion (21) between a backward non-operating position, in which the seat (19) is disengaged from the connection means (18), and a forward operating position, in which it sends a visual signal meaning that the seat (19) is coupled with the connection means (18).

19. Device according to claim 18, **characterized in that** said stationary portion (21) and said sliding element (22) have a basically cylindrical shape.

20. Device according to any of the preceding claims, **characterized in that** it further comprises elastic means pushing said resting element (8) against the tubular element (2).

## Patentansprüche

1. Befestigungsvorrichtung für Rohrelemente, insbesondere zur Befestigung von Kindersitzen, Gepäckträgern und ähnliches an Fahrräder, umfassend:
- einen ersten beweglichen Abschnitt (3) mit einer Achse, an welcher entlang ein Rohrelement zu befestigen ist, und einer Innenfläche (3a), die im montierten Zustand dem Rohrelement (2) gegenüberliegt;
- einen zweiten beweglichen Abschnitt (4) mit einer Innenfläche (4a), die der Innenfläche (3a) des ersten beweglichen Abschnittes (3) gegenüberliegt, wobei das genannte Rohrelement (2) zwischen der Innenflächen (3a, 4a) des jeweiligen beweglichen Abschnittes (3, 4) anzuordnen ist;
- Verbindungsmittel (5), die mit dem genannten ersten und zweiten beweglichen Abschnitt (3, 4) gekoppelt sind, um die beweglichen Abschnitte (3,4) gegeneinander und weg voneinander zu verschieben und die beweglichen Abschnitte (3, 4) miteinander zu verbinden;
wobei mindestens ein der genannten ersten und zweiten beweglichen Abschnitte (3, 4) mindestens ein Auflageelement (8) zur Anlage am Rohrelement (2) aufweist,
wobei das genannte Auflageelement (8) auf der jeweiligen Innenfläche (3a, 4a) des genannten mindestens einen der genannten ersten und zweiten beweglichen Abschnitte (3, 4) bewegbar montiert ist;
**dadurch gekennzeichnet, dass** das genannte Auflageelement (8) zum Drehen längs einer jeweiligen, zur Achse des ersten beweglichen Abschnittes (3) parallelen Achse (8a) zwischen mehreren Betriebsstellungen geeignet ist.

2. Vorrichtung nach Anspruch 1, **dadurch gekennzeichnet, dass** jeder bewegliche Abschnitt (3, 4) mindestens ein bewegbar montiertes Auflageelement (8) aufweist.

3. Vorrichtung nach Anspruch 1 oder 2, **dadurch gekennzeichnet, dass** jeder bewegliche Abschnitt (3, 4) zwei beweglichen Auflageelemente (8) aufweist.

4. Vorrichtung nach Anspruch 3, **dadurch gekennzeichnet, dass** die genannten Auflageelemente (8) des ersten und zweiten beweglichen Abschnittes (3, 4) zur symmetrischen Anordnung zueinander in bezug auf das Rohrelement (2) geeignet sind.

5. Vorrichtung nach irgendeinem der vorstehenden Ansprüche, **dadurch gekennzeichnet, dass** jedes Auflageelement (8) eine Anlagefläche (10) haben kann, die am Rohrelement (2) anliegt und der Außenfläche des genannten Rohrelements im wesentlichen entspricht.

6. Vorrichtung nach irgendeinem der vorstehenden Ansprüche, **dadurch gekennzeichnet, dass** die genannten Auflageelemente (8) auf den genannten beweglichen Abschnitte (3, 4) drehbar montiert sind.

7. Vorrichtung nach irgendeinem der vorstehenden Ansprüche, **dadurch gekennzeichnet, dass** jeder bewegliche Abschnitt (3, 4) zwei Auflageelemente (8) aufweist, die um jeweilige parallele Längsachsen (8a) drehen.

8. Vorrichtung nach Anspruch 7, **dadurch gekennzeichnet, dass** jedes Auflageelement (8) eine längliche Form aufweist, die sich entlang der entsprechenden Längsachse (8a) erstreckt.

9. Vorrichtung nach irgendeinem der Ansprüche 5 bis 8, **dadurch gekennzeichnet, dass** jedes Auflageelement (8) einen Oberflächenabschnitt (9) aufweist, der sich entlang der gesamten Längserstreckung des genannten Auflageelements erstreckt und eine Hohlform besitzt, wobei die genannte Anlagefläche (10) in dem Oberflächenabschnitt (9) angeordnet ist.

10. Vorrichtung nach irgendeinem der vorstehenden Ansprüche, **dadurch gekennzeichnet, dass** sie außerdem Einbaumittel (11) aufweist, die mit jedem beweglichen Abschnitt (3, 4) gekoppelt sind, um das jeweilige Auflageelement (8) auf den jeweiligen beweglichen Abschnitt (3, 4) zu verbolzen.

11. Vorrichtung nach Anspruch 10, **dadurch gekennzeichnet, dass** die genannten Einbaumittel (11)
- ein Paar Ansätze (12), die sich quer von der Innenfläche (3a, 4a) des jeweiligen beweglichen Abschnittes (3, 4) erstrecken, wobei jeder Ansatz auf jeweiligen Enden des entsprechenden Auflageelements (8) angeordnet ist; und
- einen Stift (14), der durch eine in jedem Ansatz herausgearbeitete Öffnung (12a) und durch ein Loch (8a) durchgeht, das im jeweiligen Auflageelement (8) ausgebildet ist und sich entlang der Längsachse (8a) des genannten Auflageelements erstreckt, umfassen.

12. Vorrichtung nach irgendeinem der vorstehenden Ansprüche, **dadurch gekennzeichnet, dass** die genannten Verbindungsmittel (5) mehrere Schrauben (6) aufweisen, die in Gewindelöchern (6a) operativ eingesetzt sind, welche auf Seitenabschnitten (7) jedes beweglichen Abschnittes angeordnet sind.

13. Vorrichtung nach irgendeinem der vorstehenden Ansprüche, **dadurch gekennzeichnet, dass** sie außerdem einen ersten kastenförmigen Körper (15), der mit dem ersten beweglichen Abschnitt (3) anzukuppeln ist, und einen zweiten kastenförmigen Körper (16), der mit dem zweiten beweglichen Abschnitt (4) anzukuppeln ist, aufweist, wobei die genannten kastenförmigen Körper (15, 16) so miteinander gekoppelt sind, dass sie eine Umhüllung (17) für den genannten ersten und zweiten beweglichen Abschnitt (3, 4) bilden.

14. Vorrichtung nach vorstehendem Anspruch, **dadurch gekennzeichnet, dass** mindestens ein der genannten kastenförmigen Körper (15, 16) Anschlussmittel (18) für einen Fahrrad-Kindersitz (19) aufweist.

15. Vorrichtung nach Anspruch 14, **dadurch gekennzeichnet, dass** die genannten Anschlussmittel (18) mindestens eine Öffnung (18a) aufweisen, die im genannten kastenförmigen Körper (15, 16) angeordnet ist und sich im wesentlichen parallel zur Erstreckungsachse des Rohrelements (2) erstreckt.

16. Vorrichtung nach Anspruch 14 oder 15, **dadurch gekennzeichnet, dass** sie außerdem Anzeigemittel (20) zur Anzeige des richtigen Eingriffs von dem Sitz (19) mit den Anschlussmitteln (18) aufweist.

17. Vorrichtung nach Anspruch 16, **dadurch gekennzeichnet, dass** die genannten Anzeigemittel (20) visuelle Anzeigemittel sind.

18. Vorrichtung nach Anspruch 16 oder 17, **dadurch gekennzeichnet, dass** die genannten Anzeigemittel (20) mindestens
- einen stationären Abschnitt (21), der von dem genannten kastenförmigen Körper (15, 16) an einem Ende der genannten Öffnung (18a) vorsteht; und
- ein Schiebeelement (22), das auf dem genannten stationären Abschnitt (21) eingebaut ist und in bezug auf den genannten stationären Abschnitt (21) beweglich ist zwischen einer rückwärts nicht-operativen Stellung, in welcher der Sitz (19) nicht in Eingriff mit den Anschlussmitteln (18) steht, und einer vorwärts operativen Stellung, in welcher es ein Sichtsignal sendet, welches bedeutet, dass der Sitz (19) mit den Anschlussmitteln (18) gekoppelt ist, umfassen.

19. Vorrichtung nach Anspruch 18, **dadurch gekennzeichnet, dass** der genannte stationäre Abschnitt (21) und das genannte Schiebeelement (22) im wesentlichen zylinderförmig sind.

20. Vorrichtung nach irgendeinem der vorstehenden Ansprüche, **dadurch gekennzeichnet, dass** sie außerdem elastische Mittel umfasst, die das genannte Auflageelement (8) gegen das Rohrelement (2) schieben.

## Revendications

1. Dispositif de fixage pour des éléments tubulaires, en particulier pour fixer des petites chaises d'enfant, des porte-bagages et des objets similaires à une bicyclette, comprenant:
- une première portion mobile (3) ayant un axe, le long duquel doit être fixé un élément tubulaire, et une surface interne (3a), qui est tournée vers l'élément tubulaire (2) à l'état monté;
- une deuxième portion mobile (4) ayant une surface interne (4a), qui est tournée vers la surface interne (3a) de la première portion mobile (3), ledit élément tubulaire (2) étant à placer entre les surfaces internes (3a, 4a) des respectives portions mobiles (3, 4);
- des moyens de liaison (5) accouplés avec ladite première et deuxième portion mobile (3, 4) pour déplacer les portions mobiles (3, 4) l'une vers l'autre et les éloigner l'une de l'autre et pour joindre les portions mobiles (3, 4) l'une à l'autre;
au moins une desdites première et deuxième portions mobiles (3, 4) comprend au moins un élément d'appui (8) pour s'appuyer contre l'élément tubulaire (2), ledit élément d'appui (8) étant monté d'une façon mobile sur la respective surface interne (3a, 4a) de ladite au moins une desdites première et deuxième portions mobiles (3, 4);
**caractérisé en ce que** ledit élément d'appui (8) est apte à tourner le long d'un axe respectif (8a) parallèle à l'axe de la première portion mobile (3) entre une pluralité de positions opérationnelles.

2. Dispositif selon la revendication 1, **caractérisé en ce que** chaque portion mobile (3, 4) comprend au moins un élément d'appui (8) monté d'une façon mobile.

3. Dispositif selon la revendication 1 ou 2, **caractérisé en ce que** chaque portion mobile (3, 4) comprend deux éléments d'appui (8) mobiles.

4. Dispositif selon la revendication 3, **caractérisé en ce que** lesdits éléments d'appui (8) de la première et deuxième portion mobile (3, 4) sont aptes à être rangés symétriquement l'un par rapport à l'autre et par rapport à l'élément tubulaire (2).

5. Dispositif selon l'une quelconque des revendications précédentes, **caractérisé en ce que** chaque élément d'appui (8) est apte à avoir une surface de contact (10) s'appuyant contre l'élément tubulaire (2) et correspondant essentiellement à la surface externe dudit élément tubulaire.

6. Dispositif selon l'une quelconque des revendications précédentes, **caractérisé en ce que** lesdits éléments d'appui (8) sont montés d'une façon tournante sur lesdites portions mobiles (3, 4).

7. Dispositif selon l'une quelconque des revendications précédentes, **caractérisé en ce que** chaque portion mobile (3, 4) comprend deux éléments d'appui (8) tournant autour des respectifs axes longitudinaux (8a) parallèles.

8. Dispositif selon la revendication 7, **caractérisé en ce que** chaque élément d'appui (8) a une forme élongée s'étendant le long de l'axe longitudinal (8a) correspondent.

9. Dispositif selon l'une quelconque des revendications 5 à 8, **caractérisé en ce que** chaque élément d'appui (8) a une portion superficielle (9) s'étendant le long de toute l'extension longitudinale dudit élément d'appui et ayant une forme creuse, ladite surface de contact (10) étant définie dans la portion superficielle (9).

10. Dispositif selon l'une quelconque des revendications précédentes, **caractérisé en ce qu'**il comprend en outre des moyens de montage (11) accouplés avec chaque portion mobile (3, 4) pour monter sur pivot le respectif élément d'appui (8) sur la respective portion mobile (3, 4).

11. Dispositif selon la revendication 10, **caractérisé en ce que** lesdits moyens de montage (11) comprennent:
- deux prolongements (12) s'étendant transversalement de la surface interne (3a, 4a) de la respective portion mobile (3, 4), chaque prolongement étant disposé sur des extrémités respectives de l'élément d'appui (8) correspondent; et
- un pivot (14) passant à travers une ouverture (12a) obtenue dans chaque prolongement et à travers un trou (8a) obtenu dans le respectif élément d'appui (8) et s'étendant le long de l'axe longitudinal (8a) dudit élément d'appui.

12. Dispositif selon l'une quelconque des revendications précédentes, **caractérisé en ce que** lesdits moyens de liaison (5) comprennent une pluralité de vis (6) insérées d'une façon opérationnelle dans des trous filetés (6a) pratiqués dans des portions latérales (7) de chaque portion mobile.

13. Dispositif selon l'une quelconque des revendications précédentes, **caractérisé en ce qu'**il comprend en outre un premier corps en forme de boîte (15), à accoupler avec la première portion mobile (3), et un deuxième corps en forme de boîte (16), à accoupler avec la deuxième portion mobile (4), lesdits corps en forme de boîte (15, 16) étant accouplés l'un avec l'autre de manière à former une enveloppe (17) pour ladite première et deuxième portion mobile (3, 4).

14. Dispositif selon la revendication précédente, **caractérisé en ce que** au moins un desdits corps en forme de boîte (15, 16) comprend des moyens d'assemblage (18) pour une petite chaise d'enfant pour bicyclettes (19).

15. Dispositif selon la revendication 14, **caractérisé en ce que** lesdits moyens d'assemblage (18) comprennent au moins une ouverture (18a) obtenue dans ledit corps en forme de boîte (15, 16) et qui s'étend essentiellement parallèle à l'axe de développement de l'élément tubulaire (2).

16. Dispositif selon la revendication 14 ou 15, **caractérisé en ce qu'**il comprend en outre des moyens de signalisation (20) signalant l'engagement correct de la petite chaise (19) avec les moyens de jonction (18).

17. Dispositif selon la revendication 16, **caractérisé en ce que** lesdits moyens de signalisation (20) sont des moyens de signalisation visuels.

18. Dispositif selon la revendication 16 ou 17, **caractérisé en ce que** lesdits moyens de signalisation (20) comprennent au moins:
- une portion stationnaire (21) saillant dudit corps en forme de boîte (15, 16) sur une extrémité de ladite ouverture (18a); et
- un élément coulissant (22) monté sur ladite portion stationnaire (21) et mobile par rapport à ladite portion stationnaire (21) entre une position non opérationnelle en arrière, dans laquelle la petite chaise (19) est désengagée des moyens de jonction (18), et une position opérationnelle en avant, dans laquelle il transmet un signal visuel indiquant que la petite chaise (19) est accouplée avec les moyens d'assemblage (18).

19. Dispositif selon la revendication 18, **caractérisé en ce que** ladite portion stationnaire (21) et ledit élément coulissant (22) ont une forme essentiellement cylindrique.

20. Dispositif selon l'une quelconque des revendications précédentes, **caractérisé en ce qu'**il comprend en outre des moyens élastiques poussant ledit élément d'appui (8) contre l'élément tubulaire (2).
